(19) **Europäisches Patentamt / European Patent Office / Office européen des brevets**

(11) **EP 3 111 548 B1**

(12) **EUROPEAN PATENT SPECIFICATION**

(45) Date of publication and mention of the grant of the patent:
**20.01.2021 Bulletin 2021/03**

(21) Application number: **15707738.9**

(22) Date of filing: **26.02.2015**

(51) Int Cl.:
**H02M 7/5387** *(2007.01)*    **H02M 1/12** *(2006.01)*
**H02M 1/32** *(2007.01)*    **H02J 3/38** *(2006.01)*

(86) International application number:
**PCT/GB2015/050548**

(87) International publication number:
**WO 2015/128647 (03.09.2015 Gazette 2015/35)**

(54) **POWER CONVERTER**

LEISTUNGSUMWANDLER

CONVERTISSEUR DE PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2014 GB 201403357**

(43) Date of publication of application:
**04.01.2017 Bulletin 2017/01**

(73) Proprietor: **BOWMAN POWER GROUP LIMITED Hampshire SO14 5QY (GB)**

(72) Inventor: **LYONS, John**
**Southampton**
**Hampshire SO14 5QY (GB)**

(74) Representative: **Murgitroyd & Company**
**Murgitroyd House**
**165-169 Scotland Street**
**Glasgow G5 8PL (GB)**

(56) References cited:
**WO-A1-2005/027301**    **WO-A2-2011/160643**
**US-A1- 2006 256 587**    **US-A1- 2009 279 336**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Field of the invention

The present invention relates to power conversion. Embodiments of the present invention relate to a power converter, and a method of operating a power converter.

## Background to the invention

In order for a power source to be able to export power to an AC electrical grid, it is necessary to convert the power output from the power source into an AC form suitable for injection into the grid. A power converter is used for this purpose. A power converter comprises a DC/AC inverter which comprises an array of switches and diodes which are switched on and off in sequence in order to synthesise an AC power waveform from a DC supply. It will be appreciated that the DC supply may be generated directly, or may be obtained from an AC source using an AC/DC converter. The power converter also comprises a filter arrangement which smoothes out the waveform generated by the DC/AC inverter to more closely match the AC waveform of the electrical grid, to which the output of the filter arrangement is connected. The filter arrangement typically comprises inductors and capacitors. The peak current in the filter inductor is a combination of the grid frequency current and the modulation frequency current (that is, the switching frequency of the DC/AC inverter). In normal operation the grid frequency current varies sinusoidally, and the magnitude of the modulation frequency current varies in proportion to the instantaneous grid voltage. Near a zero crossing of the grid voltage, the magnitude of the modulation frequency currents is high, whereas near the peak of the grid frequency voltage, the magnitude of the modulation frequency currents is low. That is, when the grid frequency current is at a maximum, the modulation frequency current is at a minimum, and vice-versa.

However, recently emerging grid connect guidelines specify that the power electronics must continue working during a grid fault when the grid voltage may collapse to near zero. In these conditions, the modulation frequency current is close to its maximum value all of the time and the combination of grid frequency current and modulation frequency current may therefore be caused to exceed the maximum current rating of the inductor in the filter arrangement. One way of overcoming this problem is to increase the inductance value of the inductor. However, this is not desirable because it may not be possible to fit larger inductors into present designs without major changes, and it would also significantly affect the unit cost.

Document US 2006/0256587 A1 discloses a voltage source converter for high power application. If a disturbance in the connected AC network occurs, a pulse-width modulator with fast dynamic control and operating with a high switching frequency is selected to operate the switches of the converter.

Embodiments of the present invention seek to address these problems.

## Summary of the invention

According to an aspect of the present invention, there is provided a power converter according to claim 1.

In this way, by increasing (for example doubling) the modulation (switching) frequency related to the pulsed outputs to be provided to the output line corresponding to the disturbed phase of the DC/AC inverter (switching circuitry) only during an electrical disturbance on the utility grid, it is possible to reduce the peak modulation frequency current during the disturbance so that the total current within an inductor provided at the output of the switching circuitry is within the capability of the inductor. A present design of power electronics module can therefore be made to meet the new grid codes without significant extra costs or hardware design changes.

Preferably, in a normal operation mode the switching frequency is fixed at a first predetermined frequency, and in a disturbed operation mode entered when the controller detects the electrical disturbance the switching frequency related to the pulsed outputs to be provided to the output line corresponding to the disturbed phase is fixed at a second predetermined frequency which is higher than the first predetermined frequency.

The electrical disturbance is detected when a grid voltage drops below a predetermined threshold. The predetermined threshold may for example be approximately 90% of a normal grid voltage. The electrical disturbance may be detected when an RMS grid voltage drops below the predetermined threshold. Alternatively, the electrical disturbance may be detected when an instantaneous voltage measured at the utility grid is less than an expected instantaneous voltage.

In one embodiment, the switching frequency related to the pulsed outputs to be provided to the output line corresponding to the disturbed phase is doubled during the electrical disturbance. However, it will be appreciated that any other increase in the switching frequency may be applied, provided that the increase is sufficient to alleviate the above problems.

The controller may be responsive to the cessation of the electrical disturbance to decrease the switching frequency related to the pulsed outputs to be provided to the output line corresponding to the disturbed phase to its original value. The electrical disturbance may be determined to have ceased when the grid voltage exceeds a predetermined value (e.g. the 90% of normal grid voltage value). As with the case of detecting the grid disturbance, the detection of the cessation of the grid disturbance may be based on an RMS grid voltage or an instantaneous voltage.

The controller may be responsive to the electrical disturbance persisting for more than a predetermined duration to cause the power converter to switch off and/or stop exporting power to the utility grid. This both complies with grid connect guidelines, and also prevents damage to the power electronics, which may only be capable of supporting high speed switching for a relatively short duration.

The power converter is operable to generate pulsed outputs at the switching frequency on a plurality of output lines corresponding to different phases of a multi-phase utility grid. In other words, the invention may be applied to a 3 phase power grid, although it can also be applied to in principle any number of phases greater than 1. The controller of the power converter of claim 1 is responsive to the detection of an electrical disturbance in one phase of the utility grid to increase the switching frequency only in relation to the pulsed outputs to be provided to the output line corresponding to the disturbed phase. This technique is advantageous for the efficiency of the power converter.

The power converter preferably comprises a filter arrangement for smoothing the output of the switching circuitry. The filter comprises an inductor, which can be smaller (have a lower maximum current rating) than would need to be the case without the invention.

Preferably, the pulsed outputs alternate between a first pulse type during which the switching circuitry is configured to pass the voltage at the first of the DC supply lines to increase the output current through the inductor, and a second pulse type during which the switching circuitry is configured to pass the voltage at the second of the DC supply lines to decrease the output current through the inductor. Preferably, the durations of the first and second pulse types are controlled to provide an output current waveform which is synchronised with the utility grid.

**Detailed description**

The invention will now be described by way of example with reference to the following Figures in which:

Figure 1 schematically illustrates an energy recovery system;
Figure 2 schematically illustrates a power converter;
Figure 3 schematically illustrates the switching circuitry of a DC/AC inverter;
Figure 4 schematically illustrates a first example of a filter arrangement;
Figure 5 schematically illustrates a second example of a filter arrangement;
Figure 6 schematically illustrates inductor currents when the utility grid is operating normally;
Figure 7 schematically illustrates inductor currents during a grid disturbance;
Figure 8 schematically illustrates inductor currents at two different switching frequencies corresponding to a normal operation mode and a disturbed operation mode; and

Figure 9 is a schematic flow diagram summarising the operation of a power converter according to a comparative example helpful to understand the present invention.

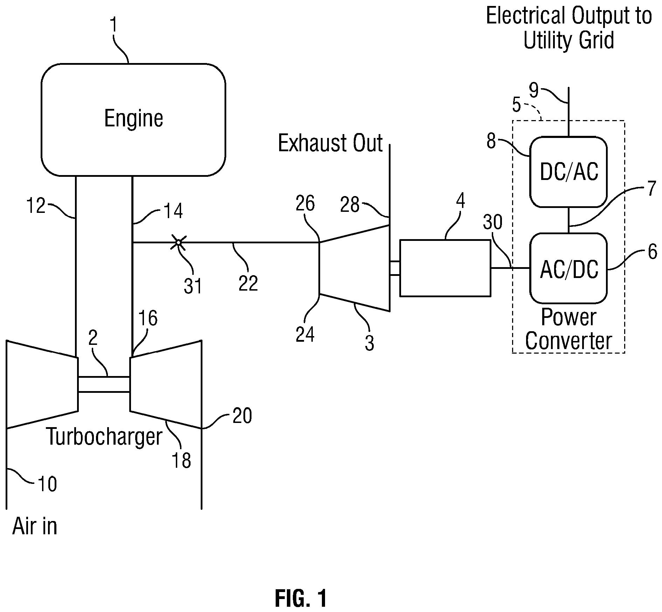

Referring first to Figure 1, this shows a system comprising a turbocharged engine, a turbogenerator and associated power converter (PC) used to convert the power generated from the turbogenerator into a form that can be injected into the utility electrical grid network. While Figure 1 illustrates a turbogenerator provided in parallel with a turbocharger, the turbogenerator could instead be provided in series with (following) the turbocharger. It will be appreciated that Figure 1 is merely illustrative of one type of power source with which a power converter according to the present invention could be used. In Figure 1, a turbocharged engine 1 is provided, which has an exhaust outlet 14 which leads, via an exhaust conduit 22 and a valve 31, to an inlet 26 of a turbogenerator 3. An associated power converter 5 is provided to convert power generated by the turbogenerator 3 into a form that can be injected into the utility electrical grid network (electrical output to utility grid).

The reciprocating engine 1 may be a diesel or spark ignition reciprocating engine, arranged to receive incoming air via an air supply line 10 from a turbocharger 2 by way of an air inlet conduit 12. The exhaust conduit 14 exhausts into an inlet 16 of a turbine 18 of the turbocharger 2 in addition to leading to the turbogenerator 3. The valve 31 controls the proportion of exhaust gases being provided to the turbocharger 2 versus the turbogenerator 3. An outlet 20 of the turbine 18 exhausts to atmosphere.

The turbogenerator 3 comprises a turbine 24, having the inlet 26 for receiving fluid from the exhaust conduit 22 and an outlet 28 for exhausting fluid to atmosphere. The turbogenerator 3 also comprises an alternator 4 arranged on an output shaft of the turbine 24 for the conversion of shaft power into electrical power, and the alternator 4 is connected by way of an electrical connection 30 to a power converter 5, which supplies an electrical output, as shown, to a utility electrical grid network. The power converter 5 includes an AC/DC converter 6 for converting the AC output from the alternator 4 to a DC supply on a DC link line 7, and a DC/AC inverter 8 for generating a three-phase output for supply to the utility grid via an output line 9. 3 phase DC/AC inverters are widely used in Variable Speed Motor drives, UPS systems and Grid Connect inverters. When used for UPS or Grid Connect applications, there is a filter fitted between the DC/AC inverter and the output terminals. The purpose of the filter is to remove the unwanted high frequency switching frequency currents and pass through the lower frequency grid frequency (typically 50Hz or 60Hz) currents. These filters typically comprise of a combination of inductors and capacitors arranged to give the desired filter characteristic.

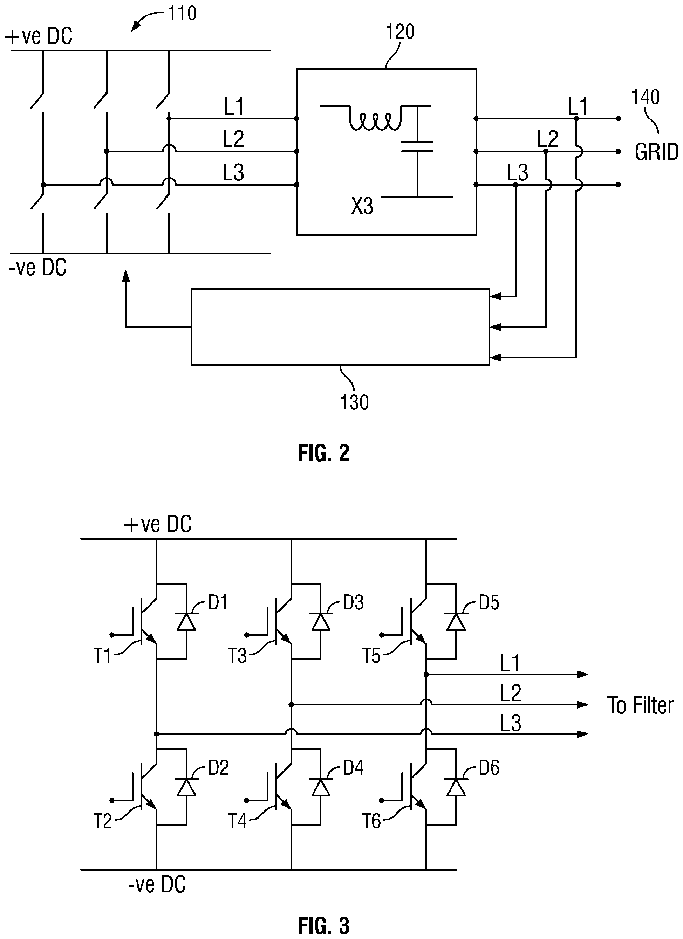

Figure 2 schematically illustrates a simple form of 3 phase DC/AC inverter. In Figure 2, switching circuitry 110 is provided, comprising in this case 6 ideal switches. A controller 130 is provided to control the opening and closing of each of the 6 switches of the switching circuitry 110, and a filter arrangement 120 of inductors and capacitors is provided to provide a smooth AC output waveform suitable for injection into an electricity grid 140. The controller 130 senses the voltage levels at (all three phases of) the grid 140 to determine the zero-point crossings for each phase, which is used by the controller 130 to time the opening and closing of the switches in the switching circuitry 110 to synchronise the output of the switching circuitry 110 (and filter arrangement 120) to be synchronised with the grid 140. The magnitude and direction (positive or negative) of the grid voltage of each phase is also used to trigger a switching frequency change of the switching circuitry 110, as will be described in detail below. In a common implementation of the 3 phase DC/AC inverter, the 6 switches are implemented using anti parallel pairs of IGBTs and diodes, as shown in Figure 3. In particular, the DC/AC inverter of Figure 3 comprises six transistors T1, T2, T3, T4, T5, T6 each paired with a corresponding diode D1, D2, D3, D4, D5, D6 in an antiparallel relationship with the transistor. The transistors T1, T2 and the diodes D1, D2 can be switched to control the voltage asserted at the output line L3. The transistors T3, T4 and the diodes D3, D4 can be switched to control the voltage asserted at the output line L2. The transistors T5, T6 and the diodes D5, D6 can be switched to control the voltage asserted at the output line L1. Taking transistors T1 and T2 for example, only one of these switches is closed at any given time. If the switch T1 is closed and the switch T2 is open then this connects the higher (positive) +DC rail to the output line L3. If the switch T1 is open and the switch T2 is closed then this connects the lower (negative) -ve DC rail to the output line L3. In each switching period of the switching circuitry 110, the switch T1 is open and the switch T2 is closed for a first part of the switching period, and the switch T1 is closed and the switch T2 is open for a second part of the switching period. Due to the presence of the inductor (in the filter arrangement 120) at the output of the switching circuitry, the output current increases over time during the first part of the switching period (high voltage rail attached to the output line L3) and decreases over time during the second part of the switching period (low voltage rail attached to the output line L3). By controlling the duty ratio of the first part of the switching period to the second part of the switching period, it is possible to control whether the net effect of that switching period is to increase or decrease the current in the inductor. In other words, pulse width modulation (PWM) is used to control the switches to synthesise an AC-like waveform. The same principle applies to the switches T3 and T4, and the switches T5 and T6. This type of switching circuitry and mode of operation is well known in the field of DC/AC inverters. Other implementations are possible including alternative power devices (eg FETs) and alternative topologies (e.g. multi-level inverters). The invention is not dependent on the particular nature of the DC/AC inverter.

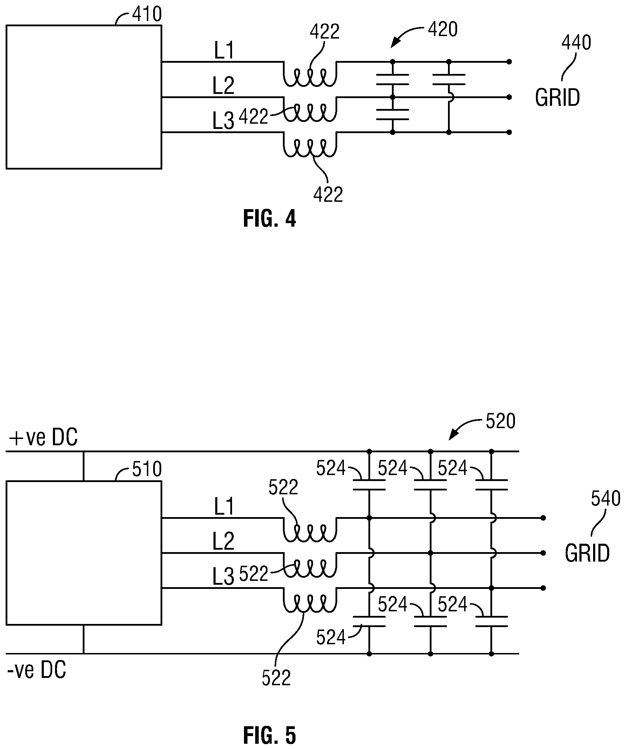

It will be appreciated that the switching operation described above will result in an output current waveform which approximates a sinusoidal AC waveform, but which has a sawtooth waveform at the switching frequency of the switching circuitry 110 overlaid on the desired sinusoid. This needs to be smoothed in order to provide an AC waveform suitable for export to the grid. This is achieved by using filter circuitry as shown in Figure 4, and in Figure 5, which set out two possible filter arrangements. It can be seen that a filter arrangement 420 of Figure 4 utilises a combination of inductors 422 and capacitors 424 to remove the high (switching) frequency components output from an inverter 410, in order to provide an output waveform suitable for exporting to a utility grid 440. Similarly, it can be seen that a filter arrangement 520 of Figure 5 utilises a combination of inductors 522 and capacitors 524 to remove the high (switching) frequency components output from an inverter 510, in order to provide an output waveform suitable for exporting to a utility grid 540. The invention is not dependent on the particular nature of the filter arrangement. However, it will be observed that both of the illustrated filter arrangements make use of an inductor on each of the output lines from the inverter.

The current in an inductor is defined by the following equation:

$$V/L = di/dt \qquad \qquad \ldots (1)$$

Where:

   V = voltage across the inductor
   L = Inductance value
   di = incremental current
   dt = incremental time

In other words, the rate of change of current through an inductor is related to the voltage (which may change) and (inversely) to the inductance of the inductor (which does not change).

Any given inductor is rated to be able to handle a particular amount of current. If a higher current than this is passed through an inductor then the inductor may fail.

The following describes an embodiment of the invention in detail based on a particular implementation; however other implementations of the invention may give similar benefits.

The current in the filter inductor has two components:

   i) A grid frequency component (typically 50Hz or 60Hz).
   ii) A modulation frequency component (in this example 35kHz during normal operation).

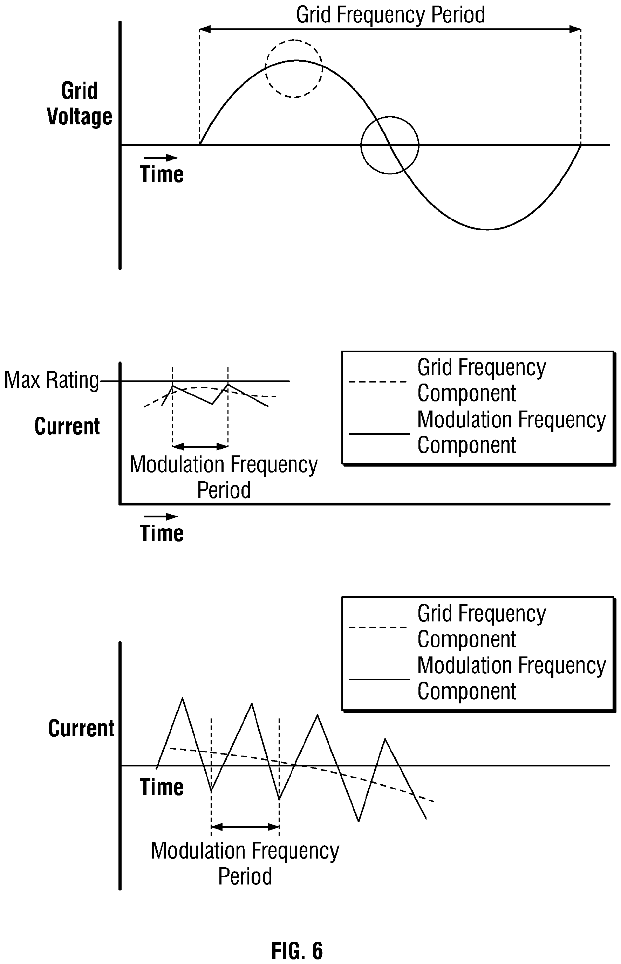

Figure 6 schematically illustrates the grid frequency and modulation frequency components during normal operation. The top graph of Figure 6 illustrates the voltage waveform over time, which can be seen to be sinusoidal at the grid frequency. The middle graph illustrates the current waveform over time around a peak in the sinusoidal grid frequency voltage waveform. The bottom graph illustrates the current waveform over time around a zero crossing of the grid voltage in the sinusoidal grid frequency voltage waveform. By comparing the middle and bottom graphs, it can be seen that the modulation frequency component has an amplitude which is dependent on the phase of the grid voltage. Near a zero crossing of the grid voltage (bottom graph), the magnitude of the modulation frequency switching current is high, whereas near the peak of the grid frequency voltage (middle graph), the magnitude of the modulation frequency current is low. In other words, when the grid frequency current is at a maximum, the modulation frequency current is at a minimum, and vice-versa. As a result, the maximum current rating for the inductor need only be set slightly above the grid frequency component current. The maximum current rating is shown in the middle graph of Figure 6.

The reason for the phase variation of the modulation frequency component is that, from Equation (1) above, the rate of change of current through an inductor is directly proportional to the voltage drop across it. For example, when the positive DC rail is connected via a switch to the inductor, the voltage drop near a zero crossing of the grid voltage will be $V_s/2$ (where $V_s$ is the supply voltage), whereas near the peak (e.g. the middle graph in Figure 6) the voltage drop will be at its closest to zero.

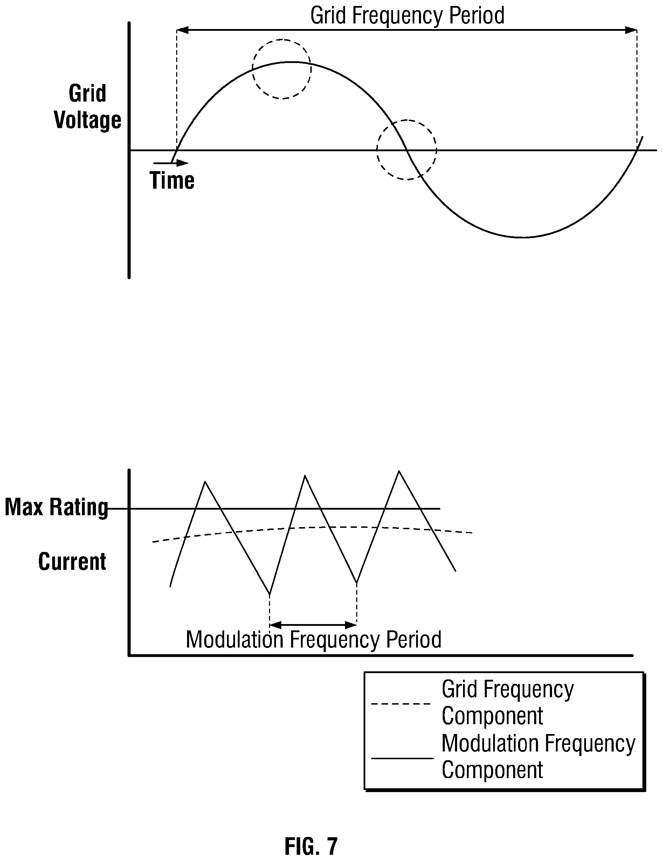

As explained above, new grid codes (regulations) specify that a grid connected inverter must continue exporting current during a grid fault for a short period of time (typically of the order of 2 seconds) when the grid voltage may collapse to near zero. In these conditions, the modulation frequency current is close to its maximum value all the time (because the voltage drop over the inductor is always at $V_s/2$) and the combination of grid frequency current and modulation frequency current now exceeds the maximum current rating of the inductor, as is apparent from Figure 7. It can be seen that Figure 7 is similar to Figure 6, but describes the case where the grid voltage has collapsed (note that the grid frequency component still exists, since this is synthesised by the inverter and filter arrangement - it is the grid voltage which has collapsed to zero rather than the synthesised voltage generated by the power converter). In Figure 7, the zero-crossing case is not repeated, since this is unchanged compared with the normal operation in Figure 6. However, the behaviour near the peak of the grid frequency voltage component (bottom graph in Figure 7) is shown to mirror the behaviour near the zero-crossing in Figure 6. It can be seen from Figure 6 that this causes the peak current to exceed the maximum current rating of the inductor, which may cause the inductor to fail. It will be appreciated that the same principle will apply at the negative current peak of the sinusoidal grid frequency voltage.

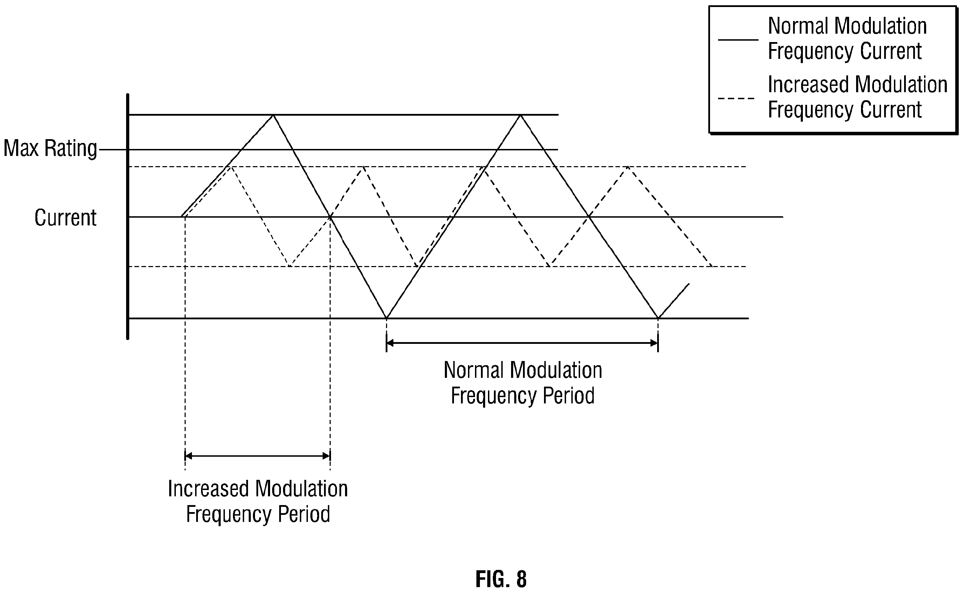

As explained above, the rate of change of current (di/dt) in an inductor depends on the inductance value and the voltage across the inductor. Given that the voltage is fixed and increasing the inductance has undesirable cost, size & weight implications, an alternative way of reducing the change in current (di) is to reduce the time (dt), that is, to increase the modulation frequency. Figure 8 schematically illustrates how doubling the modulation frequency can halve the peak to peak modulation frequency current. In particular, because the modulation frequency period is reduced (halved in the Figure 8 example), the current increases/decreases by less on each half cycle (given that di - the slope of the increase/decrease - remains the same). In particular, when the switching frequency is increased, the pulse width modulation ratio between the first type of pulse and the second type of pulse remains the same, but the actual duration of each of the two pulse types will need to be decreased by the same proportion as the frequency increase. For example, if the switching frequency is doubled, the duration of the pulsed outputs generated by the switching circuitry is halved. As a result, as can be seen from Figure 8, the current does not climb as high during high frequency operation, with the result that the maximum current rating of the inductor is not exceeded. As will be appreciated, the same would apply near the opposite (negative) peak of grid frequency voltage.

In the context of a comparative example, it will therefore be understood that by increasing the switching frequency during a grid disturbance, it is possible to avoid a situation in which an inductor in the filter arrangement exceeds its maximum current rating and consequently fails. In order to do this, it is necessary to detect that a grid disturbance has occurred. The most convenient way to do this is to detect a drop in the grid voltage. The controller already senses grid voltage in order to identify zero voltage crossing points for use in synchronising the synthesised output waveform with the grid. The same voltage sensing can be used to monitor (for each phase in the case of a multi-phase grid) the grid voltage for the purpose of detecting an electrical disturbance on the grid. In particular, when a measured voltage drops below a predetermined first threshold the controller increases the switching frequency of the switching circuitry. Then, while the switching circuitry is operating at the new, higher, switching frequency, the controller continues to monitor the grid voltage, and when the measured grid voltage rises above a predetermined second threshold (which may be the same as, or higher or lower than the first threshold, but can be expected in most cases to be substantially similar) then the controller reverts to the original (lower) switching frequency. Two main possibilities for voltage-based grid disturbance detection are envisaged.

The first possibility is to continuously measure the RMS (root mean square) voltage of each phase with respect to a moving time window, and to identify the occurrence of a grid disturbance if the RMS voltage drops below a predetermined threshold. It will be appreciated that other similar time-integrated measures of voltage could be used instead. This measure is relatively straightforward to calculate, but involves some delay before a voltage collapse will be detected. The main alternative is to continuously monitor the instantaneous voltage of each phase, and compare it with an expected voltage at that instant. In principle the grid voltage of a given phase can be expected (during normal operation) to follow a reliable sinusoidal waveform. This reliable waveform can be used to determine, for any given time instant, an expected voltage for that phase. The controller may determine the expected voltage waveform based on the zero crossing points (which are already determined for the purpose of synchronisation with the grid). If the measured instantaneous voltage drops below the expected voltage for that time instant by more than a certain amount (e.g. if the instantaneous voltage is less than 90% of its expected value) then this may be considered to indicate the occurrence of a grid disturbance. In some cases it may be necessary to detect, say, 2 or more successive instants which are at less than 90% of their expected value before changing the switching frequency, in order to reduce the likelihood of transient noise effects triggering the change in switching frequency. In either case, it will be appreciated that the original switching frequency may be resumed when the measured grid voltage exceeds a predetermined threshold (either RMS voltage threshold, or a threshold defined with respect to an expected instantaneous voltage - in the latter case potentially multiple successive measurements exceeding the threshold may be required in order that the switching frequency is to revert to its original value). In a comparative example for the present 3 phase design which does not fall into the scope of the claims, the switching frequency in relation to all phases is increased in response to a grid disturbance on any one or more phases of the grid. However, in the claimed embodiment the detection of a grid disturbance on one phase only results in a frequency increase in relation to the phase in relation to which a disturbance has been detected.

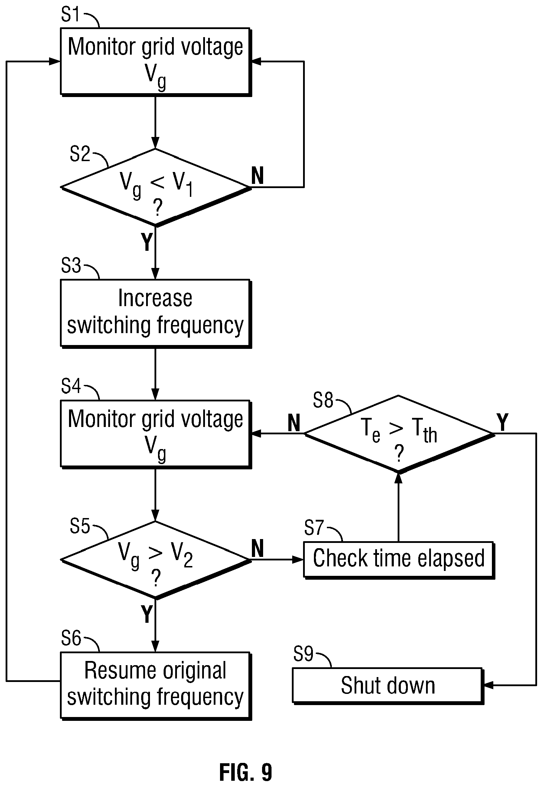

Figure 9 is a schematic flow diagram summarising the operation of a comparative example which is helpful to understand the claimed invention. Prior to a step S1, the grid voltage is assumed to be normal (as defined by the grid code) and as described with reference to Figure 2, the controller operates the switches according to some control algorithm and modulation strategy to export the desired current to the grid. The waveforms in Figure 6 illustrate this condition. At the step S1, the controller continuously monitors the grid voltage $V_g$. If the grid voltage $V_g$ drops below some pre-set limit $V_1$ (as defined by the grid code and typically equal to 90% of $V_g$) at a step S2, then the controller increases the modulation frequency at a step S3. With the increased modulation frequency, the peak inductor currents are lower as illustrated by Figure 8, avoiding damage to the inductors. If the step S2 is not satisfied, the process reverts to the step S1. Following the step S3, the grid voltage $V_g$ continues to be monitored at a step S4. If the grid voltage $V_g$ rises above some pre-set limit $V_2$ (which is likely to be the same as or similar to the limit $V_1$, although it may be slightly different (higher) to avoid flip-flopping between the high and low modulation frequency states) at a step S5, then the controller resumes the original modulation frequency at a step S6. Otherwise, at a step S7 a time $T_e$ elapsed since the switching circuitry entered the high switching frequency state is compared with a time threshold $T_{th}$. If the time $T_e$ is determined at a step S8 to be greater than (or equal to) the time $T_{th}$, then the power converter either switches off or stops exporting power to the grid at a step S9. Otherwise, the process reverts to the step S4.

It will be appreciated that some loss mechanisms within the operation of the inverter are modulating frequency dependent - that is, the losses are higher if the modulation frequency is higher. Normally an inverter design considers component costs, component ratings, desired efficiency and other factors when selecting components and modulation frequencies. While it is typically possible to accept higher losses for short periods of time (for example 2 seconds), because of the impact of additional losses on efficiency, greater stress on components and so on, it is typically highly undesirable to run the inverter for long periods of time at higher modulation frequencies. It is for this reason that the steps S7, S8 and S9 are provided.

In essence, according to embodiments of this and according to the comparative examples, whatever the modulation frequency is during normal operation, the peak inductor current can be reduced from what it would otherwise have been by increasing the frequency during a low voltage grid disturbance. Increasing the modulation frequency during a grid fault event reduces the peak currents in the filter inductors which allows cheaper, smaller inductors to be specified.

## Claims

1. A power converter (5) for converting a DC input into an AC output for supply to a utility grid, the converter (5) comprising:

    switching circuitry (110) connected across a pair of DC supply lines and arranged to generate pulsed outputs at a switching frequency; and a controller (130) configured to operate the switching circuitry (110) to generate pulsed outputs at the switching frequency on a plurality of output lines corresponding to different phases of a multi-phase utility grid, the controller being responsive to the detection of an electrical disturbance in the utility grid when a grid voltage drops below a predetermined threshold, **characterised in that**

the controller (130) is responsive to the detection of an electrical disturbance in one phase of the utility grid to increase the switching frequency only in relation to the pulsed outputs to be provided to the output line corresponding to the disturbed phase.

2. A power converter (5) according to claim 1, wherein in a normal operation mode the switching frequency is fixed at a first predetermined frequency, and in a disturbed operation mode entered when the controller (130) detects the electrical disturbance the switching frequency related to the pulsed outputs to be provided to the output line corresponding to the disturbed phase is fixed at a second predetermined frequency which is higher than the first predetermined frequency.

3. A power converter (5) according to claim 1, wherein the predetermined threshold is approximately 90% of a normal grid voltage.

4. A power converter (5) according to any preceding claim, wherein the electrical disturbance is detected when an RMS grid voltage drops below the predetermined threshold.

5. A power converter (5) according to any preceding claim, wherein the electrical disturbance is detected when an instantaneous voltage measured at the utility grid is less than an expected instantaneous voltage.

6. A power converter (5) according to any preceding claim, wherein the switching frequency related to the pulsed outputs to be provided to the output line corresponding to the disturbed phase is doubled during the electrical disturbance.

7. A power converter (5) according to any preceding claim, wherein the controller (130) is responsive to the cessation of the electrical disturbance to decrease the switching frequency related to the pulsed outputs to be provided to the output line corresponding to the disturbed phase to its original value.

8. A power converter (5) according to claim 7, wherein the electrical disturbance is determined to have ceased when the grid voltage exceeds a predetermined value.

9. A power converter (5) according to any preceding claim, wherein the controller (130) is responsive to the electrical disturbance persisting for more than a predetermined duration to cause the power converter to switch off and/or stop exporting power to the utility grid.

10. A power converter (5) according to any preceding claim, wherein the pulsed outputs alternate between a first pulse type during which the switching circuitry (110) is configured to pass the voltage at the first of the DC supply lines to increase the output current through the inductor, and a second pulse type during which the switching circuitry (110) is configured to pass the voltage at the second of the DC supply lines to decrease the output current through the inductor.

11. A power converter (5) according to claim 10, wherein the durations of the first and second pulse types are controlled to provide an output current waveform which is synchronised with the utility grid.

**Patentansprüche**

1. Ein Leistungswandler (5) zum Umwandeln eines Gleichstromeingangs in einen Wechselstromausgang für die Zufuhr an ein Versorgungsnetz, wobei der Wandler (5) Folgendes beinhaltet:

    Schaltschaltungen (110), die über ein Paar von Gleichstromzufuhrleitungen verbunden sind und angeordnet sind, um gepulste Ausgänge mit einer Schaltfrequenz zu erzeugen; und eine Steuereinheit (130), die konfiguriert ist, um die Schaltschaltungen (110) zu betreiben, um gepulste Ausgänge mit der Schaltfrequenz auf einer Vielzahl von Ausgangsleitungen zu erzeugen, die verschiedenen Phasen eines mehrphasigen Versorgungsnetzes entsprechen, wobei die Steuereinheit auf die Erfassung einer elektrischen Störung in dem Versorgungsnetz reagiert, wenn eine Netzspannung unter einen vorbestimmten Schwellenwert fällt,
**dadurch gekennzeichnet, dass**
die Steuereinheit (130) auf die Erfassung einer elektrischen Störung in einer Phase des Versorgungsnetzes reagiert, um die Schaltfrequenz nur in Bezug auf die gepulsten Ausgänge zu erhöhen, die der der gestörten Phase entsprechenden Ausgangsleitung bereitzustellen sind.

2. Leistungswandler (5) gemäß Anspruch 1, wobei in einem normalen Betriebsmodus die Schaltfrequenz auf eine erste vorbestimmte Frequenz festgelegt ist und in einem gestörten Betriebsmodus, in den eingetreten wird, wenn die Steuereinheit (130) die elektrische Störung erfasst, die Schaltfrequenz, die sich auf die gepulsten Ausgänge bezieht, die der der gestörten Phase entsprechenden Ausgangsleitung bereitzustellen sind, auf eine zweite vorbestimmte Frequenz festgelegt ist, die höher ist als die erste vorbestimmte Frequenz.

3. Leistungswandler (5) gemäß Anspruch 1, wobei der vorbestimmte Schwellenwert ungefähr 90 % einer normalen Netzspannung beträgt.

4. Leistungswandler (5) gemäß einem vorhergehenden Anspruch, wobei die elektrische Störung erfasst wird, wenn eine RMS-Netzspannung unter den vorbestimmten Schwellenwert fällt.

5. Leistungswandler (5) gemäß einem vorhergehenden Anspruch, wobei die elektrische Störung erfasst wird, wenn eine an dem Versorgungsnetz gemessene Momentanspannung kleiner als eine erwartete Momentanspannung ist.

6. Leistungswandler (5) gemäß einem vorhergehenden Anspruch, wobei die Schaltfrequenz, die sich auf die gepulsten Ausgänge bezieht, die der der gestörten Phase entsprechenden Ausgangsleitung bereitzustellen sind, während der elektrischen Störung verdoppelt wird.

7. Leistungswandler (5) gemäß einem vorhergehenden Anspruch, wobei die Steuereinheit (130) auf das Aufhören der elektrischen Störung reagiert, um die Schaltfrequenz, die sich auf die gepulsten Ausgänge bezieht, die der der gestörten Phase entsprechenden Ausgangsleitung bereitzustellen sind, auf ihren Originalwert zu verringern.

8. Leistungswandler (5) gemäß Anspruch 7, wobei bestimmt wird, dass die elektrische Störung aufgehört hat, wenn die Netzspannung einen vorbestimmten Wert überschreitet.

9. Leistungswandler (5) gemäß einem vorhergehenden Anspruch, wobei die Steuereinheit (130) darauf, dass die elektrische Störung länger als eine vorbestimmte Dauer andauert, reagiert, um den Leistungswandler dazu zu veranlassen, sich auszuschalten und/oder die Einspeisung von Strom in das Versorgungsnetz zu stoppen.

10. Leistungswandler (5) gemäß einem vorhergehenden Anspruch, wobei sich die gepulsten Ausgänge zwischen einer ersten Impulsart, während der die Schaltschaltungen (110) konfiguriert sind, um die Spannung an der ersten der Gleichstromzufuhrleitungen durchzulassen, um den Ausgangsstrom durch den Induktor zu erhöhen, und einer zweiten Impulsart, während der die Schaltschaltungen (110) konfiguriert sind, um die Spannung an der zweiten der Gleichstromzufuhrleitungen durchzulassen, um den Ausgangsstrom durch den Induktor zu verringern, abwechseln.

11. Leistungswandler (5) gemäß Anspruch 10, wobei die Dauer der ersten und der zweiten Impulsart gesteuert wird, um eine Ausgangsstromwellenform bereitzustellen, die mit dem Versorgungsnetz synchronisiert ist.

**Revendications**

1. Un convertisseur de puissance (5) pour convertir une entrée CC en une sortie CA pour l'alimentation d'un réseau de distribution électrique, le convertisseur (5) comprenant :

des circuits de commutation (110) connectés d'un bout à l'autre d'une paire de lignes d'alimentation CC et agencés pour générer des sorties pulsées à une fréquence de commutation ; et

un dispositif de commande (130) configuré pour faire fonctionner les circuits de commutation (110) afin de générer des sorties pulsées à la fréquence de commutation sur une pluralité de lignes de sortie correspondant à différentes phases d'un réseau de distribution électrique multiphase, le dispositif de commande étant sensible à la détection d'une perturbation électrique dans le réseau de distribution électrique lorsqu'une tension de réseau tombe au-dessous d'un seuil prédéterminé,
**caractérisé en ce que**
le dispositif de commande (130) est sensible à la détection d'une perturbation électrique dans une phase du réseau de distribution électrique afin d'augmenter la fréquence de commutation uniquement par rapport aux sorties pulsées à fournir à la ligne de sortie correspondant à la phase perturbée

2. Un convertisseur de puissance (5) selon la revendication 1, dans lequel, dans un mode de fonctionnement normal, la fréquence de commutation est fixée à une première fréquence prédéterminée, et dans un mode de fonctionnement perturbé survenant lorsque le dispositif de commande (130) détecte la perturbation électrique, la fréquence de commutation liée aux sorties pulsées à fournir à la ligne de sortie correspondant à la phase perturbée est fixée à une deuxième fréquence prédéterminée qui est supérieure à la première fréquence prédéterminée.

3. Un convertisseur de puissance (5) selon la revendication 1, dans lequel le seuil prédéterminé est d'environ 90 % d'une tension de réseau normale.

4. Un convertisseur de puissance (5) selon n'importe quelle revendication précédente, dans lequel la perturbation électrique est détectée lorsqu'une tension de réseau RMS tombe au-dessous du seuil prédéterminé.

5. Un convertisseur de puissance (5) selon n'importe quelle revendication précédente, dans lequel la perturbation électrique est détectée lorsqu'une tension instantanée mesurée au niveau du réseau de distribution électrique est inférieure à une tension instantanée attendue.

6. Un convertisseur de puissance (5) selon n'importe quelle revendication précédente, dans lequel la fréquence de commutation liée aux sorties pulsées à fournir à la ligne de sortie correspondant à la phase perturbée est doublée durant la perturbation électrique.

7. Un convertisseur de puissance (5) selon n'importe quelle revendication précédente, dans lequel le dispositif de commande (130) est sensible à la cessation de la perturbation électrique afin de diminuer la fréquence de commutation liée aux sorties pulsées à fournir à la ligne de sortie correspondant à la phase perturbée jusqu'à sa valeur d'origine.

8. Un convertisseur de puissance (5) selon la revendication 7, dans lequel la perturbation électrique est déterminée comme ayant cessé lorsque la tension de réseau dépasse une valeur prédéterminée.

9. Un convertisseur de puissance (5) selon n'importe quelle revendication précédente, dans lequel le dispositif de commande (130) est sensible au fait que la perturbation électrique persiste pendant plus d'une durée prédéterminée afin d'amener le convertisseur de puissance à s'éteindre et/ou à arrêter l'exportation de puissance vers le réseau de distribution électrique.

10. Un convertisseur de puissance (5) selon n'importe quelle revendication précédente, dans lequel les sorties pulsées alternent entre un premier type d'impulsions durant lequel les circuits de commutation (110) sont configurés pour faire passer la tension au niveau de la première des lignes d'alimentation CC afin d'augmenter le courant de sortie à travers l'inducteur, et un deuxième type d'impulsions durant lequel les circuits de commutation (110) sont configurés pour faire passer la tension au niveau de la deuxième des lignes d'alimentation CC afin de diminuer le courant de sortie à travers l'inducteur.

11. Un convertisseur de puissance (5) selon la revendication 10, dans lequel les durées des premier et deuxième types d'impulsions sont commandées pour fournir une forme d'onde de courant de sortie qui est synchronisée avec le réseau de distribution électrique.

**FIG. 1**

**FIG. 2**

**FIG. 3**

**FIG. 4**

**FIG. 5**

FIG. 6

Grid Frequency Period

Grid
Voltage

Time

Max Rating

Current

Modulation Frequency Period

| | Grid Frequency Component |
| --- | --- |
| | Modulation Frequency Component |

FIG. 7

FIG. 8

EP 3 111 548 B1

FIG. 9

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060256587 A1